# EUROPEAN PATENT APPLICATION

(11) **EP 4 395 013 A1**
(43) Date of publication of application: **03.07.2024**
(21) Application number: 22922731.9
(22) Date of filing: 27.01.2022
(51) Int. Cl.: H01M 10/6557, H01M 10/6555, H01M 10/613, H01M 10/647

(54) **BATTERY, POWER-CONSUMING DEVICE, METHOD FOR PREPARING BATTERY, AND DEVICE FOR PREPARING BATTERY**

(71) Applicant: Contemporary Amperex Technology Co., Limited, Ningde, Fujian 352100 (CN)
(72) Inventor: ZHOU, Yandong, Ningde, Fujian 352100 (CN); SHEN, Zhen, Ningde, Fujian 352100 (CN); HUANG, Yincheng, Ningde, Fujian 352100 (CN)
(74) Representative: Gong, Jinping
(86) International application number: PCT/CN2022/074347
(87) International publication number: WO 2023/141885

(57) **Abstract**

Embodiments of the present application provide a battery, an electrical apparatus, and a method and apparatus for preparing a battery. The battery includes: a plurality of battery cells, wherein an electrode terminal is disposed on an end face of each battery cell in a first direction, and the plurality of battery cells are arranged in a second direction which is orthogonal to the first direction; and a thermal management component, which is located between adjacent ones of the battery cells in the second direction and used for conducting temperature regulation of the battery cells. The thermal management component has a central portion and end portions located on both sides of the central portion in a third direction, and the width of the central portion is smaller than that of the end portions in the second direction, so that a gap is formed in the second direction between the central portion and the adjacent battery cells.

## Description

### TECHNICAL FIELD

The present application relates to the field of energy storage apparatuses, and more particularly, to a battery, an electrical apparatus, a method for preparing a battery, and an apparatus for preparing a battery.

### BACKGROUND ART

Energy conservation and emission reduction is the key to the sustainable development of automobile industry. In this case, electric vehicles have become an important part of the sustainable development of automotive industry due to their advantages of energy saving and environmental protection. For electric vehicles, battery technology is an important factor related to their development.

With the continuous development of the battery technology, higher requirements are placed on the performance of the battery, and it is expected that the battery can consider various design factors at the same time.

### SUMMARY OF THE INVENTION

The present application provides a battery, an electrical apparatus, a method for preparing a battery, and an apparatus for preparing a battery, so as to improve the safety of the battery.

In a first aspect, a battery is provided, which includes: a plurality of battery cells, wherein an electrode terminal is disposed on an end face of each battery cell in a first direction, and the plurality of battery cells are arranged in a second direction which is orthogonal to the first direction; and a thermal management component, which is located between adjacent ones of the battery cells in the second direction and used for conducting temperature regulation of the battery cells. The thermal management component has a central portion and end portions located on both sides of the central portion in a third direction, and the width of the central portion is smaller than that of the end portions in the second direction, so that a gap is formed in the second direction between the central portion and the adjacent battery cells.

In the battery, in order to keep the temperature of the battery cell within a certain range so that the battery can exert excellent electrochemical performance, the thermal management component is used for conducting temperature regulation of the battery cell. In a case where the battery cell fails or is overheated, etc., the battery cell will expand and deform, and the deformation degree is greater especially on a large-area surface where no electrode terminals are provided. If the expansion of the electrode cell is excessively restricted, it may cause damage to the battery cell, thereby compromising the safety of the entire battery.

In the technical solution of the present application, for the plurality of battery cells arranged in the second direction, the thermal management component is positioned between adjacent battery cells, so that one thermal management component can be used for conducting temperature regulation of two battery cells that are adjacent in the second direction. Furthermore, the electrode terminal is disposed on the end face of each battery cell in the first direction, so the thermal management component conducts temperature regulation of the face of the battery cell on which no electrode terminal is disposed. Moreover, the thermal management component has a central portion and end portions located on both sides of the central portion in the third direction, and the width of the central portion is smaller than that of the end portions in the second direction, so that a gap is formed between the central portion and the adjacent battery cells in the second direction. Therefore, when the battery cell expands and deforms, the gap can be used for providing an expansion space, thereby preventing the battery cell from being damaged and ensuring the safety of the battery.

In some embodiments, the battery cell has two opposite side faces in the second direction. The side faces are formed as planes. The central portion of the thermal management component has central portion opposite faces, and the central portion opposite faces are respectively opposite to the side faces of the two adjacent battery cells. The two end portions of the thermal management component have end portion opposite faces, and the end portion opposite faces are respectively opposite to the side faces of the two adjacent battery cells. Thus, the thermal management component conducts temperature regulation of the side faces of the two adjacent battery cells in the second direction, thermal management efficiency can be improved by conducts temperature regulation of the large-area side faces formed as planes. Moreover, faces of the thermal management component opposite to the side faces of the battery cell have central portion opposite faces and end portion opposite faces, so that different temperature regulation manners can be adopted for different portions on the side faces of the battery cell.

In some embodiments, the central portion opposite faces are formed in arc shape. That is, in the thermal management component, in order to make the width of the central portion smaller than that of the end portions in the second direction, by adopting a manner in which the central portion opposite faces are formed in arc shape, a gap is formed between the arc-shaped central portion opposite faces and the side faces of the battery cell. When the side faces of the battery cell expand, the gap can be used for provide an expansion space. Furthermore, by forming the central portion opposite faces in arc shape, the side faces of the expanded battery cell can be brought into contact with the smoothly arc-shaped central portion opposite faces, thereby relieving the stress applied to the side faces of the battery cell and further improving the safety of the battery.

In some embodiments, the central portion includes a center of the thermal management component in the third direction. The central portion is formed such that the width in the second direction gradually becomes larger from the center to the two end portions. When the side faces of the battery cell expand, usually the central parts of the side faces have the largest expansion amplitude. Therefore, in the thermal management component, the width of the central portion at the center in the third direction is minimized, so that the shape of the central portion opposite faces are enabled to correspond to the expansion degree of the side faces, thereby providing a suitable expansion space better.

In some embodiments, the end portion opposite faces are formed as planes to be in surface contact with the side faces of the battery cell. Both the central portion opposite faces and the end portion opposite faces can regulate the temperature of the side faces of the battery cell, and by making a part of the side faces of the battery cell be in direct surface contact with the two end portion opposite faces of the thermal management component, the thermal management efficiency is further improved.

In some embodiments, in the third direction, the height of the thermal management component is the same as that of the battery cell. Therefore, the thermal management component can be utilized effectively to conduct temperature regulation of the entire side faces of the battery cell, and thus the thermal management efficiency can be improved.

In some embodiments, in the third direction, the height of the central portion is 50%-90% of that of the thermal management component. In this way, when the side faces of the battery cell expand, a sufficient expansion space can be provided by utilizing the central portion opposite faces, and effective temperature regulation can be realized by utilizing the end portion opposite faces. That is, by adopting such a height range, both the thermal management efficiency and an expansion energy absorption effect can be taken into account.

In some embodiments, a plurality of flow channels are formed in the thermal management component. The flow channels extend along the first direction, and are used for circulating a fluid which can conduct temperature regulation of the battery cell. A plurality of the flow channels are arranged in the third direction. By forming the plurality of flow channels arranged in the third direction, the plurality of flow channels located at the central portion and the end portions can be utilized to improve the flow channel area of the thermal management component for temperature regulation and increase the flow rate of the fluid, thereby improving the thermal management efficiency.

In some embodiments, in the thermal management component, the fluid flow of the flow channel located at the end portion is greater than that of the flow channel located at the central portion. Since the gap is formed between the central portion opposite faces and the side faces of the battery cell, the thermal management efficiency of the flow channel located at the end portion is higher than that of the flow channel located at the central portion. By making the fluid flow of the flow channel located at the end portion greater than that of the flow channel located at the central portion, the temperature regulation capability of the fluid located at the end portion can be effectively utilized, thereby improving the thermal management efficiency.

In some embodiments, the thermal management component is provided with a thermally conductive member. The thermally conductive member is disposed at the central portion, and is in surface contact with the side faces of the adjacent battery cells. A gap is formed between the thermally conductive member and the central portion opposite faces. The thermal management efficiency of the central portion can be improved by allowing the thermally conductive member to be in surface contact with the side faces, and when the side faces of the battery cell expand, the thermally conductive member can be deformed accordingly, so that the gap formed between the thermally conductive member and the central portion opposite faces can be utilized to provide an expansion space.

In some embodiments, the thermally conductive member is integrally formed in the thermal management component. Thus, compared with the case where the thermal management component and the thermally conductive member are separately formed and the thermally conductive member is mounted in the thermal management component, the manufacturing process can be simplified and the production efficiency can be improved.

In some embodiments, the thermal management component is provided with a buffer member which is disposed at the central portion and used for filling the gap formed between the side faces of the battery cell and the central portion opposite faces. In this way, the expansion deformation of the side faces of the battery cell can be sufficiently absorbed by the buffer member. Furthermore, heat can be transferred by utilizing the buffer member in contact with both the side faces of the battery cell and the central portion opposite faces, thereby improving the thermal management efficiency.

In some embodiments, the plurality of battery cells are arranged in the first direction, and the thermal management component extends along the first direction to conduct thermal management of the plurality of battery cells. A plurality of battery cells are usually disposed in a regular arrangement in the battery. In case where a plurality of battery cells are arranged in the first direction, by allowing the thermal management component to extend along the first direction as well, the thermal management component is enabled to conduct thermal management of the plurality of battery cells, so that the thermal management efficiency can be improved widely.

In a second aspect, an electrical apparatus is provided, which includes the battery of the first aspect. The battery is used for providing electric energy.

In a third aspect, a method for preparing a battery is provided, which includes: providing a plurality of battery cells, wherein an electrode terminal is disposed on an end face of each battery cell in a first direction, and the plurality of battery cells are arranged in a second direction which is orthogonal to the first direction; and providing a thermal management component which is located between adjacent ones of the battery cells in the second direction, wherein the thermal management component has a central portion and end portions located on both sides of the central portion in a third direction, and the width of the central portion is smaller than that of the end portions in the second direction, so that a gap is formed in the second direction between the central portion and the adjacent battery cells.

In a fourth aspect, an apparatus for preparing a battery is provided, which includes: a first providing module for providing a plurality of battery cells, wherein an electrode terminal is disposed on an end face of each battery cell in a first direction, and the plurality of battery cells are arranged in a second direction which is orthogonal to the first direction; a second providing module for providing a thermal management component, so that the thermal management component has a central portion and end portions located on both sides of the central portion in a third direction, and the width of the central portion is smaller than that of the end portions in the second direction; and an mounting module for disposing the thermal management component between adjacent ones of the battery cells in the second direction, so that a gap is formed between the central portion and the adjacent battery cells in the second direction.

### DESCRIPTION OF DRAWINGS

The drawings described herein are intended to provide a further understanding of the present application, which constitute a part of the present application. The illustrative embodiments of the present application and the description thereof are for explaining the present application and do not constitute an undue limitation of the present application. In the drawings:
Fig. 1 is a schematic view of a vehicle according to an embodiment of the present application;
Fig. 2 is a schematic perspective structural view of a battery according to an embodiment of the present application;
Fig. 3(a) is a schematic perspective view of an assembled structure of a thermal management component and battery cells on both sides thereof according to an embodiment of the present application, and Fig. 3(b) is a directional view obtained by observing an end portion of the assembled structure shown in Fig. 3(a) from the first direction and a schematic structural view of the thermal management component;
Fig. 4(a) is a schematic perspective view of an assembled structure of a thermal management component and battery cells on both sides thereof according to another embodiment of the present application, and Fig. 4(b) is a directional view obtained by observing an end portion of the assembled structure shown in Fig. 4(a) from the first direction and a schematic structural view of the thermal management component;
Fig. 5(a) is a schematic perspective view of an assembled structure of a thermal management component and battery cells on both sides thereof according to another embodiment of the present application, and Fig. 5(b) is a directional view obtained by observing an end portion of the assembled structure shown in Fig. 5(a) from the first direction and a schematic structural view of the thermal management component;
Fig. 6 is a schematic flowchart of a method for preparing a battery according to an embodiment of the present application; and
Fig. 7 is a schematic block diagram of an apparatus for preparing a battery according to an embodiment of the present application.

### DETAILED DESCRIPTION

In order to make the objectives, technical solutions and advantages of the embodiments of the present application clearer, the following clearly describes the technical solutions in the embodiments of the present application with reference to the accompanying drawings in the embodiments of the present application, the described embodiments are a part rather than all of the embodiments of the present application. Based on the embodiments in the present application, all others embodiments obtained by those of ordinary skills in the art without creative labor are within the claimed scope of the present application.

Unless otherwise defined, all technical and scientific terms used in the present application have the same meaning as commonly understood by those skilled in the art to which the present application belongs. The terms used in the specification of the present application are for the purpose of describing specific embodiments only, and are not intended to limit the present application. The terms "include/comprise" and "have" and any variations thereof in the specification and claims of the present application as well as in the aforementioned description of drawings are intended to cover a non-exclusive inclusion. The terms "first", "second" and the like in the specification and claims of the present application or the aforementioned drawings are used for distinguishing different objects, rather than describing a specific sequence or primarysubordinate relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skills in the art, the specific meanings of the aforementioned terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

The battery mentioned in the embodiments of the present application refers to a single physical module including a plurality of battery cells to provide higher voltage and capacity. For example, the battery mentioned in the present application may include a battery module, a battery pack, or the like.

The battery cell includes an electrode assembly and an electrolyte solution, and the electrode assembly includes a positive electrode plate, a negative electrode plate, and a separator. The battery cell works mainly dependent on the movement of metal ions between the positive electrode plate and the negative electrode plate. The positive electrode plate includes a positive electrode current collector and a positive electrode active material layer. A surface of the positive electrode current collector is coated with the positive electrode active material layer. A current collector not coated with the positive electrode active material layer protrudes from the current collector coated with the positive electrode active material layer. The current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, or lithium manganate, etc. The negative electrode plate includes a negative electrode current collector and a negative electrode active material layer. A surface of the negative electrode current collector is coated with the negative electrode active material layer. A current collector not coated with the negative electrode active material layer protrudes from the current collector coated with the negative electrode active material layer. The current collector not coated with the negative electrode active material layer serves as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. The material of the separator may be PP or PE, etc. In addition, the electrode assembly may be of a wound structure or a laminated structure, which is not limited in the examples of the present application.

Many design factors, such as energy density, cycle life, discharge capacity, charge-discharge rate and other performance parameters, should be considered in the development of the battery technology. In addition, the safety of the battery also needs to be taken into account. Currently, a battery of an electric vehicle often requires dozens or even thousands of battery cells.

In the battery, a thermal management component is used for conducting temperature regulation of the battery cells to keep the temperature of the battery cell within a certain range, so that the battery can exert excellent electrochemical performance. In a case where the battery cell fails or is overheated, etc., the battery cell will expand and deform. If the expansion of the electrode cell is excessively restricted by an adjacent rigid component, it may cause damage to the battery cell, thereby compromising the safety of the entire battery.

In view of this, the present application provides a technical solution in which a battery includes: a plurality of battery cells, wherein an electrode terminal is disposed on an end face of each battery cell in a first direction, and the plurality of battery cells are arranged in a second direction which is orthogonal to the first direction; and a thermal management component, which is located between adjacent ones of the battery cells in the second direction and used for conducting temperature regulation of the battery cells. The thermal management component has a central portion and end portions located on both sides of the central portion in a third direction, and the width of the central portion is smaller than that of the end portions in the second direction, so that a gap is formed in the second direction between the central portion and the adjacent battery cells.

In the technical solution of the present application, for the plurality of battery cells arranged in the second direction, the thermal management component is positioned between adjacent battery cells, so that one thermal management component can be used for conducting temperature regulation of two battery cells that are adjacent in the second direction. When the battery cell expands and deforms, the deformation degree is greater especially on a large-area surface where no electrode terminals are provided. By disposing the electrode terminal on the end face of each battery cell in the first direction, the thermal management component can conduct temperature regulation of the face of the battery cell on which no electrode terminal is disposed. Moreover, the thermal management component has a central portion and end portions located on both sides of the central portion in the third direction, and the width of the central portion is smaller than that of the end portions in the second direction, so that a gap is formed between the central portion and the adjacent battery cells in the second direction. Therefore, when the battery cell expands and deforms, the gap can be used for providing an expansion space, thereby preventing the battery cell from being damaged and ensuring the safety of the battery.

The thermal management component is a component for accommodating a fluid to regulate the temperature of the battery cell. The fluid herein may be liquid or gas, and the temperature regulation refers to heating or cooling the battery cell. In the case of cooling or lowering the temperature of the battery cell, the thermal management component is used for accommodating a cooling fluid to lower the temperature of the battery cell. At this time, the thermal management component may also be called a cooling component, a cooling system or a cooling plate, etc. The fluid accommodated by the thermal management component may also be called a cooling medium or a cooling fluid, and more specifically, may be called a cooling liquid or a cooling gas. Moreover, the thermal management component can also be used for heating to raise the temperature of the battery cell, which will not be limited in the embodiments of the present application. Optionally, the fluid may flow in a circulating manner to achieve a better temperature regulation effect. Optionally, the fluid may be water, a mixture of water and ethylene glycol, or air, etc.

An electrical apparatus is provided in an embodiment of the present application, and a battery is used for providing electric energy for the electrical apparatus.

The technical solutions described in the embodiments of the present application are all applicable to various apparatuses using batteries, for example mobile phones, portable devices, laptops, battery vehicles, electric toys, electric tools, electric vehicles, ships, and spacecrafts, etc. For example, the spacecrafts include airplanes, rockets, space shuttles, and spaceships, etc.

It should be understood that the technical solutions described in the embodiments of the present application are not only applicable to the apparatuses described above, but also applicable to all apparatuses using batteries. However, for the sake of brevity, the following examples are all described by taking an electric vehicle as an example.

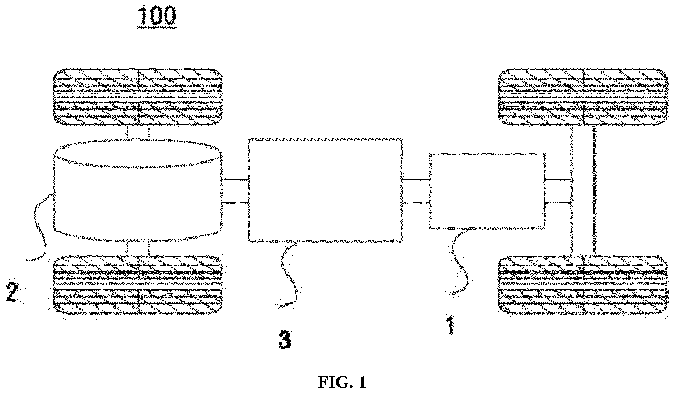

For example, as shown in Fig. 1, a schematic structural view of a vehicle 100 according to an embodiment of the present application is shown. The vehicle 100 may be a fuel vehicle, a gas vehicle, or a new-energy vehicle, and the new-energy vehicle may be an all-electric vehicle, a hybrid electric vehicle, or an extended range electric vehicle, etc. The interior of the vehicle 100 may be provided with a motor 2, a controller 3, and a battery 1. The controller 3 is used for controlling the battery 1 to supply power to the motor 2. For example, the battery 1 may be disposed at the bottom or the head or tail of the vehicle 100. The battery 1 may be used for supplying power for the vehicle 100. For example, the battery 1 may serve as an operating power source of the vehicle 100, and is used for a circuitry of the vehicle 100, for example used for starting, navigation, and operation of the vehicle 100. In another embodiment of the present application, the battery 1 can not only be used as the operating power source of the vehicle 100, but also be used as a driving power source of the vehicle 100 to provide driving power for the vehicle 100 instead of or partially instead of fuel or natural gas.

In order to meet different use power requirements, the battery 1 may include a plurality of battery cells 10, wherein the plurality of battery cells 10 may be in series connection, in parallel connection, or in parallel-series connection, and the parallel-series connection refers to mixing of the series connection and the parallel connection.

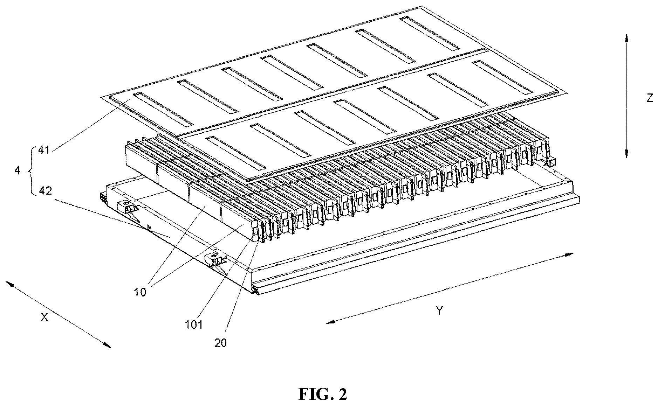

As shown in Fig. 2, a schematic exploded view of a three-dimensional structure of the battery 1 according to an embodiment of the present application is shown. The battery 1 includes a plurality of battery cells 10, wherein the plurality of battery cells 10 can be arranged along a first direction X and a second direction Y, wherein the first direction X is orthogonal to the second direction Y. That is, the plurality of battery cells 10 in the battery 1 may be arranged in a matrixlike structure. Optionally, the battery 1 may also have only one battery cell 10, or have a plurality of battery cells 10 arranged along the first direction X, or have a plurality of battery cells 10 arranged along the second direction Y. The battery 1 may further include a box body 4, the interior of the box body 4 is a hollow structure, and a plurality of battery cells 10 are accommodated in the box body 4. As shown in Fig. 2, the box body 4 may include two parts, which are referred to here as an upper cover 41 and a box shell 42 respectively. The upper cover 41 and the box shell 42 are fastened together. The shapes of the upper cover 41 and the box shell 42 may be determined according to a shape of a combination of the plurality of battery cells 10. For example, it is possible that the upper cover 41 and the box shell 42 are each a hollow cuboid with only one face being an opening face, the opening of the upper cover 41 and the opening of the box shell 42 are disposed opposite to each other, and the upper cover 41 and the box shell 42 are fastened to each other to form the box body 4 with a closed chamber. It is also possible that the upper cover 41 is a cuboid with an opening and box shell 42 is in a plate shape, or alternatively the box shell 42 is a cuboid with an opening and the upper cover 41 is in a plate shape, and the upper cover 41 and the box shell 42 are disposed opposite to each other and fastened to form the box body 4 with a closed chamber. After the plurality of battery cells 10 are connected in parallel or in series or in parallel-series connection, they are placed in the box body 4 formed after the upper cover 41 and the box shell 42 are fastened together.

Fig. 2 shows that the box body 4 accommodates the plurality of battery cells 10. The battery cell 10 has two end faces that are opposite in the first direction X (one end face can be seen in the figure), and an electrode terminal 101 is disposed on the end face. The plurality of battery cells 10 are arranged in the second direction Y. A thermal management component 20 for conducting temperature regulation of the battery cells 10 is disposed between adjacent battery cells 10 in the second direction Y. Thus, the thermal management component 20 conducts temperature regulation of the side face of the battery cell 10 on which no electrode terminal 101 is disposed, and one thermal management component 20 can be utilized to conduct temperature regulation of two adjacent battery cells 10 in the second direction Y.

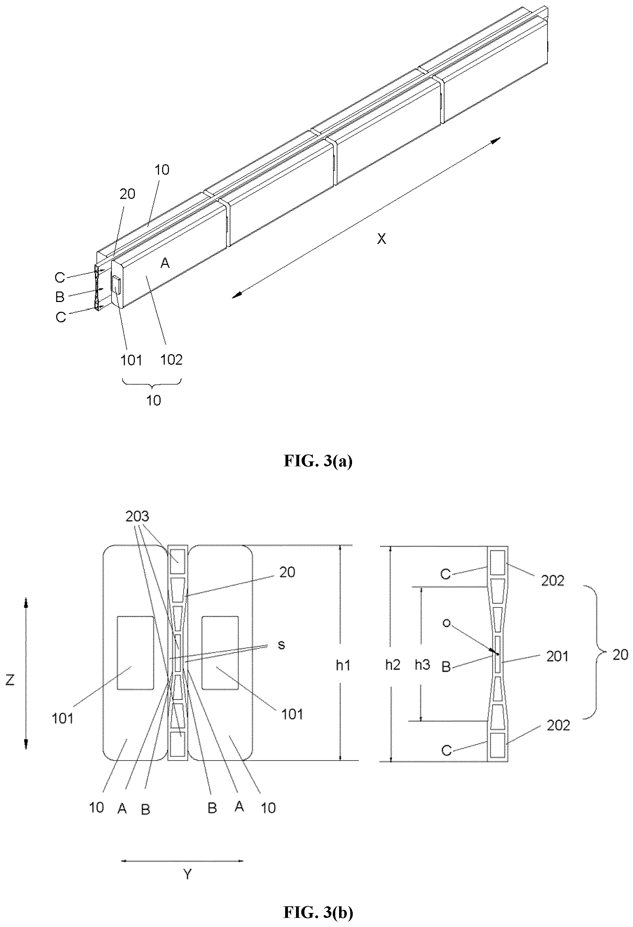

Hereinafter, the specific structure of the thermal management component 20 is illustrated using Figs. 3(a) and 3(b).

As shown in Fig. 3(a), a schematic perspective view of a assembled structure of the thermal management component 20 and the battery cells 10 on both sides thereof according to an embodiment of the present application is shown. In Fig. 3(b), the left side represents a directional view obtained by observing an end portion of the assembled structure shown in Fig. 3(a) from the first direction X, and the right side represents a schematic structural view of the thermal management component 20.

Fig. 3(a) represents an embodiment in which a plurality of battery cells 10 are arranged along the first direction X, and a thermal management component 20 is disposed between two adjacent battery cells 10 in the second direction Y. The battery cell 10 has side faces A that are opposite in the second direction Y, and no electrode terminal 101 is disposed on the side face A. Thus, the thermal management component 20 can conduct temperature regulation of the side faces A of the battery cells 10 on both sides. Generally, in a case where the battery cell 10 fails or is overheated, etc., the battery cell 10 will expand and deform, and the deformation degree is greater especially on the side face A with a larger area. By using the thermal management component 20 to conduct temperature regulation of the large-area side face A of the battery cell 10, the battery cell 10 can be efficiently adjusted to the required temperature, and the expansion and deformation of the battery cell 10 can be effectively reduced, which can improve the overall safety of the battery 1. Furthermore, by arranging the plurality of battery cells 10 in the first direction X and extending the thermal management component 20 along the first direction X, thermal management of the plurality of battery cells 10 can be conducted.

The battery cell 10 includes an electrode terminal 101, a case 102 and one or more electrode assemblies (not shown) disposed in the case 102. The case 102 depends on a shape of a combination of one or more electrode assemblies. For example, the case 102 may be a hollow cuboid or cube. Fig. 3(a) shows that the case 102 is a structure of a hollow cuboid. One or more electrode assemblies can be placed in the case 102. The case 102 is filled with an electrolyte, such as an electrolytic solution therein. Fig. 3(a) shows an example in which one electrode terminal 101 is formed on each of the two end faces of the case 102 in the first direction X (one end face is shown in the figure). However, it is also possible that two electrode terminals 101 with opposite polarities are both formed on one end face of the case 102 in the first direction X. The electrode terminal 101 can be in various shapes such as cylinder, cuboid, cube, polygonal prism, etc. The electrode terminal 101 shown in this embodiment has a cuboid structure.

As shown in Fig. 3(b), the thermal management component 20 has a central portion 201 and two end portions 202 located on the upper and lower sides of the central portion, in a third direction Z. Moreover, in the second direction Y, the width of the central portion 201 is smaller than that of the end portion 202. Therefore, gaps s are respectively formed in the second direction Y between the central portion 201 and the adjacent battery cells 10. Therefore, when the side face A of the battery cell 10 expands and deforms towards the thermal management component 20, the gap s can be utilized to provide an expansion space, thereby preventing the battery cell 10 from being damaged and ensuring the safety of the battery 1.

Moreover, as shown in Fig. 3(b), the two side faces A of the battery cell 10 opposite in the second direction Y are formed as planes, the central portion 201 of the thermal management component 20 has central portion opposite faces B, and the two end portions 202 have end portion opposite faces C, and both the central portion opposite faces B and the end portion opposite faces C are opposite to the side faces A of two adjacent battery cells 10, respectively. Thermal management efficiency can be improved by A conducts temperature regulation of the large-area side faces formed as planes. Moreover, faces of the thermal management component 20 opposite to the side faces A of the battery cell 10 have central portion opposite faces B and end portion opposite faces C, so that different temperature regulation manners can be adopted for different portions on the side faces A of the battery cell 10.

In the thermal management component 20, in order to make the width of the central portion 201 smaller than that of the end portions 202 in the second direction Y, by adopting a manner in which the central portion opposite faces B are formed in arc shape, a gap s is formed between the arc-shaped central portion opposite faces B and the side faces A of the battery cell 10. Thus, when the side faces of the battery cell 10 expand, the gap s can be used for provide an expansion space. As the way to make the width of the central portion 201 smaller than that of the end portions 202 in the second direction Y, it is not limited to forming the central portion opposite faces B in arc shape, and a manner in which the width of the central portion 201 in the second direction Y is reduced stepwise (step-shaped) or linearly (tapered) may also be adopted. In the case where the width of the central portion 201 in the second direction Y is reduced stepwise or linearly, portions where stress concentrates, such as corner portions, are formed. In contrast, by forming the central portion opposite faces B in arc shape, the side faces A of the expanded battery cell 10 can be brought into contact with the central portion opposite faces B formed in smooth arc shape, so that stress concentration does not occur locally, and the stress applied to the side faces A of the battery cell 10 can be alleviated, thereby further improving the safety of the battery 1.

As an embodiment of the arc shape of the central portion opposite faces B, in Fig. 3(b), it is shown that the central portion 201 includes the center O of the thermal management component 20 in the third direction Z, and the central portion 201 is formed such that the width in the second direction Y is gradually increased from the center O to the two end portions 202. When the side faces A of the battery cell 10 expand, usually the central parts of the side faces A have the largest expansion amplitude. Therefore, in the thermal management component 20, the width of the central portion 201 at the center O in the third direction Z is minimized, so that the shape of the central portion opposite faces B are enabled to correspond to the expansion degree of the side faces A, thereby providing a suitable expansion space better. However, the arc shape of the central portion opposite faces B is not limited thereto, as long as the central portion opposite faces B are formed in arc shape to provide an expansion space for the side face A.

As shown in Fig. 3(b), the end portion opposite faces C is formed as a plane, and is in surface contact with the side faces A of the battery cell 10 that are formed as planes. In the thermal management component 20, both the central portion 201 and the end portion 202 can conduct temperature regulation of the side faces A of the battery cell 10, but compared with the manner in which the central portion 201 conducts heat transfer through the gap s, the surface contact manner can conduct heat transfer more directly. Therefore, the two end portion opposite faces C of the thermal management component 20 are directly in surface contact with the upper and lower parts of the side faces A of the battery cell 10, thereby further improving the thermal management efficiency. As the forming material of the thermal management component 20, a material with high heat transfer efficiency, e.g., aluminum, a steel-aluminum composite material, etc. can be used.

In the third direction Z, the height h1 of the battery cell 10 is the same as the height h2 of the thermal management component 20. Therefore, the entire thermal management component 20 can be utilized effectively to conduct temperature regulation of the side faces A of the battery cell 10, and thus the thermal management efficiency can be improved. However, it is not limited thereto. Based on the mounting relationship with components such as the box body 4, the height h2 of the thermal management component 20 may also be higher or lower than the height h1 of the battery cell 10.

Moreover, in the third direction Z, the height h3 of the central portion 201 is 50%-90% of the height h2 of the thermal management component 20. In this way, when the side faces A of the battery cell 10 expand, a sufficient expansion space can be provided by utilizing the central portion opposite faces B, and effective temperature regulation can be realized by utilizing the end portion opposite faces C. That is, by adopting such a height range, both the thermal management efficiency and an expansion energy absorption effect can be taken into account.

As shown in Fig. 3(b), a plurality of flow channels 203 are formed in the thermal management component 10, and the flow channels 203 extend along the first direction X for circulating a fluid, so as to conduct temperature regulation of the battery cell 10 by utilizing the fluid. The plurality of flow channels 203 are arranged in the third direction Z, so that the flow channels 203 are formed in both the central portion 201 and the end portion 202. By forming the plurality of flow channels 203 arranged in the third direction, the plurality of flow channels 203 located at the central portion 201 and the end portions 202 can be utilized to improve the flow channel area of the thermal management component 20 for temperature regulation and increase the flow rate of the fluid, thereby improving the thermal management efficiency.

In the thermal management component 20, the fluid flow of the flow channel 203 located at end portion 202 is greater than that of the flow channel 203 located at central portion 201. Since the gap s is formed between the central portion opposite faces B and the side faces A of the battery cell 10, the heat transfer efficiency of the flow channel 203 located at the end portion 202 is higher than that of the flow channel 203 located at the central portion 201. By making the fluid flow of the flow channel 203 located at the end portion 202 greater than that of the flow channel 203 located at the central portion 201, the temperature regulation capability of the fluid located at the end portion 202 can be effectively utilized, thereby improving the thermal management efficiency.

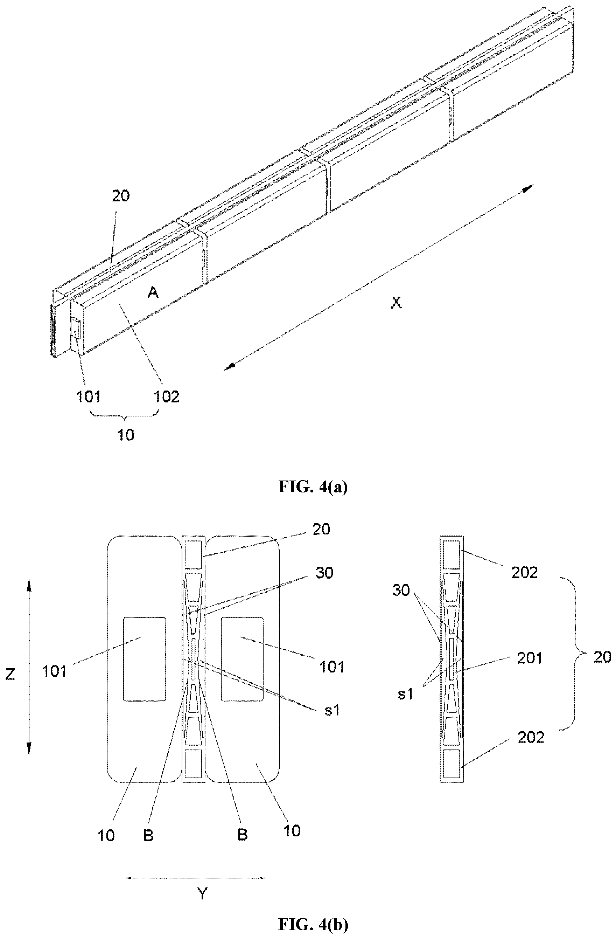

Moreover, as a manner of assembling the thermal management component 20 and the battery cell 10, the thermal management component 20 may be attached to the battery cell 10 via a thermally conductive adhesive or the like. For example, the thermal management component 20 shown in Fig. 4(b) and the two battery cells 10 located on both sides of the thermal management component in the second direction Y may be formed as an assembly, and the battery 1 is formed by assembling a plurality of the assemblies. Such an assembly-type manufacturing manner can improve production efficiency.

As shown in Fig. 4(a), a schematic perspective view of a assembled structure of the thermal management component 20 and the battery cells 10 on both sides thereof according to another embodiment of the present application is shown. In Fig. 4(b), the left side represents a directional view obtained by observing an end portion of the assembled structure shown in Fig. 4(a) from the first direction X, and the right side represents a schematic structural view of the thermal management component 20. In the following description, parts that are different from the described embodiments will be mainly described, the same components will be given the same reference numerals, and the description will be omitted.

As another embodiment of the thermal management component 20, as shown in Fig. 4(b), the thermal management component 20 is further provided with a thermally conductive member 30. The thermally conductive member 30 is disposed at the central portion 201 of the thermal management component 20 and brought in surface contact with the side faces A of the adjacent battery cells 10, so that a gap s1 is formed between the thermally conductive member 30 and the central portion opposite faces B. By bringing the thermally conductive member 30 into surface contact with the side faces A of the battery cell 10, the thermal management efficiency in the region of the central portion 201 can be improved, and the gap s1 formed between the thermally conductive member 30 and the central portion opposite faces B can be utilized to provide an expansion space. As shown in Fig. 4(b), the thermally conductive member 30 is formed in a sheet shape, so that when the side faces A of the battery cell 10 expand, the thermally conductive member 30 can deform accordingly, and thus can effectively cope with the expansion of the side faces A of the battery cell 10. As the forming material of the thermally conductive member 30, a material having a certain degree of deformability and high heat transfer efficiency can be used. For example, it is shown in Figs. 4(a) and 4(b) that, the thermally conductive member 30 is integrally formed with the thermal management component 20 by extrusion molding or the like. In this case, the thermally conductive member 30 can be formed from the same material (such as aluminum, a steel-aluminum composite material and the like) as the thermal management component 20. By integrally forming the thermally conductive member 30 on the thermal management component 20 in this way, the manufacturing process can be simplified and the production efficiency can be improved.

However, it is not limited thereto, and the thermally conductive member 30 may also be an additionally formed plate-shaped component, which is bonded to the thermal management component 20 through various connection manners such as bonding, welding, and bolting, as long as it can be deformed to a certain extent and the heat transfer efficiency is high.

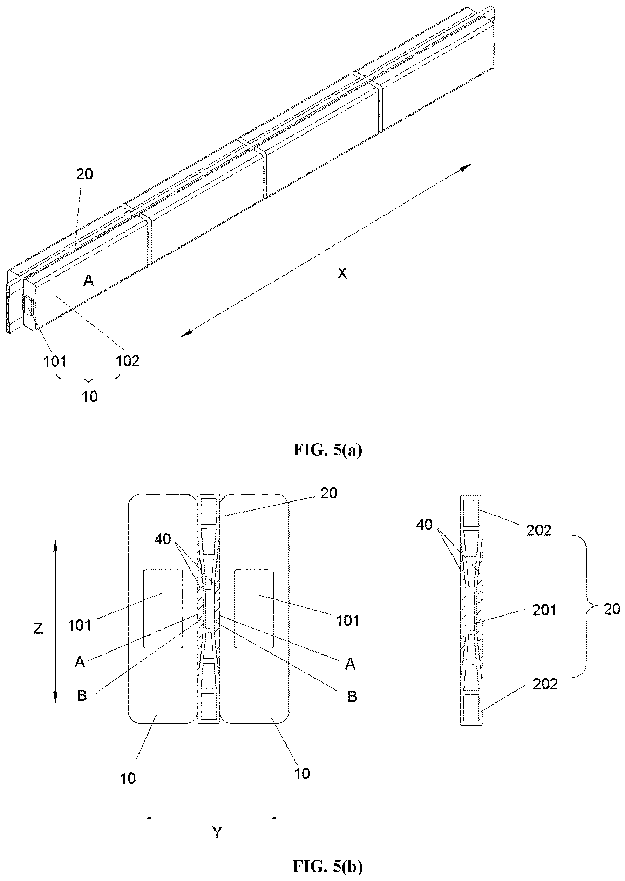

As shown in Fig. 5(a), a schematic perspective view of a assembled structure of the thermal management component 20 and the battery cells 10 on both sides thereof according to another embodiment of the present application is shown. In Fig. 5(b), the left side represents a directional view obtained by observing an end portion of the assembled structure shown in Fig. 5(a) from the first direction X, and the right side represents a schematic structural view of the thermal management component 20. In the following description, parts that are different from the described embodiments will be mainly described, the same components will be given the same reference numerals, and the description will be omitted.

As shown in Fig. 5(b), the thermal management component 20 is provided with a buffer member 40, and the buffer member 40 is disposed at the central portion 201 for filling the gap formed between the side faces A of the battery cell 10 and the central portion opposite faces B. In this way, the expansion and deformation of the side faces A of the battery cell 10 can be sufficiently absorbed by the buffer member 40, and heat can be effectively transferred by the buffer member 40 that is in contact with both the side faces A of the battery cell 10 and the central portion opposite faces B, thereby improving the thermal management efficiency. The buffer member 40 can be bonded to the thermal management component 20 with an adhesive or the like in advance. As the forming material of the buffer member 40, a compressible thermally conductive material can be selected, for example, a silicone material, an aerogel material, etc. can be mentioned.

An embodiment of the present application further provides an electrical apparatus which may include the battery 1 in any of the preceding embodiments. The battery 1 is used for providing electrical energy in the electrical apparatus.

The battery and the electrical apparatus of the embodiments of the present application are described above, and the method and apparatus for preparing a battery of the embodiments of the present application will be described below. For the parts not described in detail, reference may be made to the foregoing embodiments.

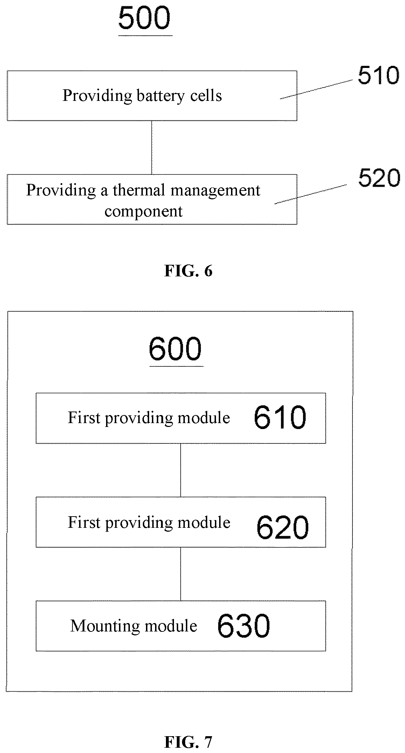

Fig. 6 shows a schematic flowchart of a method 500 for preparing a battery according to an embodiment of the present application. As shown in Fig. 6, the method 500 may include:
510. providing a plurality of battery cells 10, wherein a electrode terminal 101 is disposed on an end face of the battery cell 10 in the first direction X, the plurality of battery cells 10 are arranged in the second direction Y, and the first direction X is orthogonal to the second direction Y; and
520. providing a thermal management component 20, wherein the thermal management component 20 is located between adjacent battery cells 10 in the second direction Y,
wherein, the thermal management component 20 has a central portion 201 and end portions 202 located on both sides of the central portion 201 in the third direction Z, and the width of the central portion 201 is smaller than that of the end portions 202 in the second direction Y, so that a gap s is formed between the central portion 201 and the adjacent battery cells 10 in the second direction Y.

Fig. 7 shows a schematic block diagram of an apparatus 600 for preparing a battery according to an embodiment of the present application. As shown in Fig. 7, the apparatus 600 for preparing a battery may include: a first providing module 610, a second providing module 620 and a mounting module 630.

The first providing module 610 is used for providing a plurality of battery cells 10, wherein a electrode terminal 101 is disposed on an end face of the battery cell 10 in the first direction, the plurality of battery cells 10 are arranged in the second direction Y, and the first direction X is orthogonal to the second direction Y.

The second providing module 620 is used for providing a thermal management component 20, so that the thermal management component 20 has a central portion 201 and end portions 202 located on both sides of the central portion 201 in the third direction Z, and the width of the central portion 201 is smaller than that of the end portion 202 in the second direction Y.

The mounting module 630 disposes the thermal management component 20 between the adjacent battery cells 10 in the second direction Y, so that a gap s is formed in the second direction Y between the central portion 201 and the adjacent battery cells 10.

Finally, it should be noted that: the embodiments described above are only illustrative of the technical solutions of the present application, rather than limiting the utility model; although the present application is described in detail with reference to the foregoing embodiments, it should be understood by those of ordinary skills in the art that modifications still can be conducted to the technical solutions described in the foregoing embodiments or equivalent replacements can be conducted to some technical features in the foregoing embodiments; and these modifications and replacements would not make the nature of the corresponding technical solutions depart from the spirit and scope of the technical solutions of the embodiments of the present application.

## Claims

1. A battery, comprising:
a plurality of battery cells, wherein a electrode terminal is disposed on an end face of each battery cell in a first direction, the plurality of battery cells are arranged in a second direction, and the first direction is orthogonal to the second direction; and
a thermal management component, which is located between adjacent ones of the battery cells in the second direction and used for conducting temperature regulation of the battery cells,
wherein the thermal management component has a central portion and end portions located on both sides of the central portion in a third direction, and the width of the central portion is smaller than that of the end portions in the second direction, so that a gap is formed between the central portion and the adjacent battery cells in the second direction.

2. The battery according to claim 1, wherein
each battery cell has two side faces that are opposite in the second direction, the side faces being formed as planes,
the central portion of the thermal management component has central portion opposite faces,
the central portion opposite faces are opposite to the side faces of two adjacent battery cells respectively,
the two end portions of the thermal management component have end portion opposite faces, and
the end portion opposite faces are opposite to the side faces of two adjacent battery cells respectively.

3. The battery according to claim 2, wherein
the central portion opposite faces are formed in arc shape.

4. The battery according to claim 3, wherein
the central portion comprises a center of the thermal management component in the third direction, and
the central portion is formed such that the width in the second direction gradually becomes larger from the center to the two end portions.

5. The battery according to any one of claims 2-4, wherein
the end portion opposite faces are formed as planes to be in surface contact with the side faces of the battery cells.

6. The battery according to any one of claims 1-5, wherein
in the third direction, the height of the thermal management component is the same as that of the battery cells.

7. The battery according to any one of claims 1-6, wherein
in the third direction, the height of the central portion is 50%-90% of that of the thermal management component.

8. The battery according to any one of claims 1-7, wherein
a plurality of flow channels are formed in the thermal management component, and the flow channels extend along the first direction for circulating a fluid which is capable of conducting temperature regulation of the battery cells, and
the plurality of flow channels are arranged in the third direction.

9. The battery according to claim 8, wherein
in the thermal management component, the fluid flow of the flow channel located at the end portion is greater than that of the flow channel located at the central portion.

10. The battery according to any one of claims 1-9, wherein
the thermal management component is provided with a thermally conductive member, the thermally conductive member is disposed at the central portion, and is in surface contact with the side faces of the adjacent battery cells, and a gap is formed between the thermally conductive member and the central portion opposite faces.

11. The battery according to claim 10, wherein
the thermally conductive member is integrally formed in the thermal management component.

12. The battery according to any one of claims 1-9, wherein
the thermal management component is provided with a buffer member which is disposed at the central portion and used for filling the gap formed between the side faces of the battery cells and the central portion opposite surfaces.

13. The battery according to any one of claims 1-12, wherein
the plurality of battery cells are arranged in the first direction, and the thermal management component extends along the first direction to conduct thermal management of the plurality of battery cells.

14. An electrical apparatus, comprising the battery according to any one of claims 1-13, wherein the battery is used for providing electric energy.

15. A method for preparing a battery, comprising:
providing a plurality of battery cells, wherein a electrode terminal is disposed on an end face of each battery cell in a first direction, the plurality of battery cells are arranged in a second direction, and the first direction is orthogonal to the second direction; and
providing a thermal management component, wherein the thermal management component is located between adjacent ones of the battery cells in the second direction,
wherein the thermal management component has a central portion and end portions located on both sides of the central portion in a third direction, and the width of the central portion is smaller than that of the end portions in the second direction, so that a gap is formed between the central portion and the adjacent battery cells in the second direction.

16. An apparatus for preparing a battery, comprising:
a first providing module for providing a plurality of battery cells, wherein a electrode terminal is disposed on an end face of each battery cell in a first direction, the plurality of battery cells are arranged in a second direction, and the first direction is orthogonal to the second direction;
a second providing module for providing a thermal management component, so that the thermal management component has a central portion and end portions located on both sides of the central portion in a third direction, and the width of the central portion is smaller than that of the end portions in the second direction; and
a mounting module for disposing the thermal management component between the adjacent ones of the battery cells in the second direction, so that a gap is formed in the second direction between the central portion and the adjacent battery cells.
